# EUROPEAN PATENT SPECIFICATION

(11) **EP 1 617 616 B1**
(45) Date of publication and mention of the grant of the patent: **23.04.2008**
(21) Application number: 04016665.4
(22) Date of filing: 15.07.2004
(51) Int. Cl.: H04L 29/06

(54) **Denial-of-service protection**
'Denial-of-Service' Schutz
Protection contre le 'Denial-of-Service'

(43) Date of publication of application: 18.01.2006
(73) Proprietor: TELEFONAKTIEBOLAGET LM ERICSSON (publ), 164 83 Stockholm (SE)
(72) Inventor: Runeson, Stefan, 22457 Lund (SE)
(74) Representative: Andersson, Björn E.

(56) References cited:
- EP-A- 1 424 826
- US-A1- 2003 012 149
- US-A1- 2003 165 121
- VOICOM: "VoIP and Security" VOICOM, [Online] 31 December 2003 (2003-12-31), XP002309101 Retrieved from the Internet: URL:http://www.voicom.co.uk/Docs/VoIP_Secu rity.pdf> [retrieved on 2004-12-06]
- ROSENBERG J ET AL: "SIP: Session Initiation Protocol" RFC 3261, June 2002 (2002-06), XP002296376
- SCHULZRINNE H ET AL: "THE SESSION INITIATION PROTOCOL: INTERNET-CENTRIC SIGNALING" IEEE COMMUNICATIONS MAGAZINE, IEEE SERVICE CENTER. PISCATAWAY, N.J, US, vol. 38, no. 10, October 2000 (2000-10), pages 134-141, XP000969736 ISSN: 0163-6804
- ROSENBERG J ET AL: "SIP Traversal through Residential and Enterprise NATs and Firewalls" INTERNET DRAFT, 2 March 2001 (2001-03-02), XP002245049

## Description

### Technical Field of the Invention

The present invention relates to a method of operating a communication apparatus, and more particularly to a method of setting a port to an open state when the communication apparatus is connected to a communication network, at which port messages of a specific type should be received. The present invention also relates to a communication apparatus for implementing the method.

### Description of Related Art

A communication apparatus, such as a mobile telephone, may be configured to be connected to various communication networks, e.g. a mobile communication network, a local area network, a wide area network, and/or a global network, such as the Internet. A wide area or a global network may e.g. be a packet switched IP network, wherein packets of data are transmitted between terminals by means of attaching an electronic address, such as a URI (Universal Resource Identifier) or a URL (Universal Resource Locator), and/or a network address, such as an IP address to the transmitted data packets.

When the communication apparatus is connected to the network, it may be assigned an IP address, which is registered at a proxy server together with the electronic address. Also, a port number of a port, which is open to receive messages of a specific type, may be stored together with the network address and the electronic address at the proxy.

A sending terminal may only have the URI or URL of the receiving terminal, wherein the message is transmitted through the network server, which will direct the message to the correct network address and the correct port depending of the type of message.

IP Multimedia Subsystem (IMS) is standardized by 3GPP (Third Generation Partnership Project), and is a system for creation of multimedia services. The session Initiation Protocol (SIP) is an application layer protocol standardized by the IETF (the Internet Engineering Task Force), which is used to control multi-media sessions in IMS. SIP is running on top of IP (Internet Protocol) using either UDP (User Datagram Protocol) or TCP (Transmission Control Protocol) as transport protocol.

In the SIP standard (RFC3261) there are standardized default port numbers defined for SIP messages.

A receiving terminal, such as an IMS terminal, may have an active PDP (Packet Data Protocol) context and a valid network address as long as it is switched on or in a specific mode, in which it is connected to the network. If there are standardized default ports for messages of a specific type, such as SIP messages, it opens up for denial-of-service attacks. An attacker connected to the same network as the terminal may send messages of the specific type directly to the terminal using the default port for the specific message. To be certain that a specific terminal receives the denial-of-service message, the attacker maximally has to send one message to said default port of all IP addresses serviced by a certain proxy server. Consequently, even if the intent is to only attack one terminal all terminals that receive the message will be attacked.

A first example of a denial-of service attack is to send a malformed message. If it would be known that a terminal of a certain type would crash if it receives a certain malformed message, all terminals of that type in an operator's or proxy server's domain could be crashed by sending the malformed message to all IP addresses in the operator's domain using the default port.

A second example of a denial-of-service attack is to send a well-formed message. Since every message occupies memory resources in the terminal during a time period after reception, such as up to several minutes, a repeated transmission of well-formed messages could occupy such an amount of memory resources that other services or applications in the terminal might be affected.

US 2003/0012149 discloses a system and method for providing communication services. An application layer protocol (SIP) may be run together with a transport layer protocol (TCP). A port number may be dynamically selected and transmitted to a server.

EP 1424826 discloses IP communication, wherein ports for communication of data are selected according to whether they have been successively used for communication.

### Summary of the Invention

It is an object of the invention to provide a method and an apparatus that make a port accessible, at which electronic messages of a specific type may be received when said port is set to an open state.

The object is achieved according to a first aspect of the invention by a method for operating a communication apparatus. The method is carried out when an application layer protocol is run together with a transport protocol and comprises selecting by means of a port selection function one of a plurality of ports to make it accessible for receiving electronic messages of a specific type; and setting said selected port to an open state. Once the selected port is set to the open state, messages may be received.

The method may also comprise transmitting to a network server data for identifying the communication apparatus, and a port number of said selected port, which is set to the open state.

The selection function is a function of a unique identifier of the communication apparatus, wherein the method comprising retrieving the unique identifier of the communication apparatus prior to selecting the port. Additionally, the selection function may be a function of a time parameter, wherein the method comprises generating the time parameter prior to selecting the port. Also, selection function may be a random function for randomly selecting one of a plurality of ports.

The object is also achieved according to a second aspect of the invention by a communication apparatus adapted to implement the method according to the invention. The communication apparatus comprises means for receiving electronic messages when an application layer protocol is run together with a transport protocol in said communication apparatus, a port selecting means adapted to select by means of a port selection function one of a plurality of ports to make it accessible for receiving electronic messages of a specific type, and a controller adapted to set said selected port to an open state.

The object is also achieved according to a third aspect of the invention by a computer program product. The computer program product comprises computer program code means to execute the method according to the invention when the computer program code means is run by an electronic device having computer capabilities. The computer program code means may be embodied on a computer readable medium.

Further embodiments of the invention are defined in the dependent claims.

It is an advantage of the invention that the port is selected and open to receive messages of a specific type based on a selection function rather than a default port. Consequently, the security is increased, as an external entity does not know which port is open to receive messages of the specific type. It is a further advantage that the security can be further increased if the selection function comprises one or several selection parameters, which secure that one and the same port is not selected in one communication apparatus during successive port selection procedures.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features and advantages of the invention will appear from the following detailed description of the invention, reference being made to the accompanying drawings, in which:
Fig. 1 is a schematic view of a communication apparatus according to the invention connected to a communication network;
Fig. 2 is a block diagram of certain components of the communication apparatus according to the invention; and
Fig. 3 is a flow-chart of an embodiment of the method according to the invention.

### Detailed Description of Embodiments

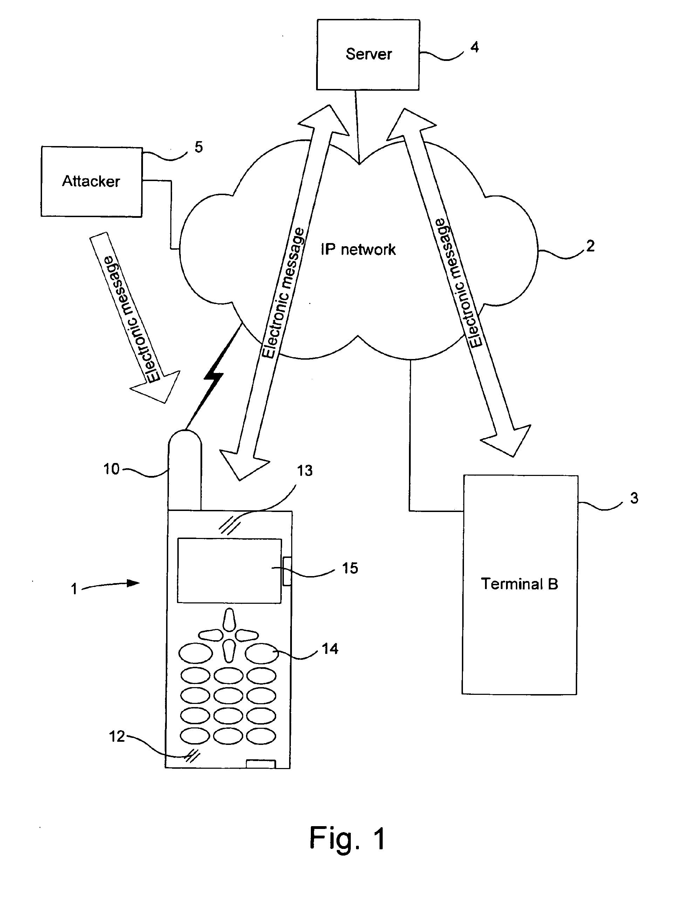

Fig. 1 illustrates a communication apparatus 1 according to the invention, which may be connected to a communication network 2, such as a packet switched IP network. One or several additional terminals, which are jointly illustrated by a terminal B 3, may be connected to the communication network 2. A network server 4 adapted to store data for identifying the communication apparatus 1, and possibly the terminal B 3, is also connected to the communication network 2. Electronic messages may be sent between the communication apparatus 1 and the terminal B 3 through the communication network 2. The messages are relayed by the network server 4. An attacker 5 may also be connected to the communication network 2. The attacker may try to transmit electronic messages to either the communication apparatus 1 or the terminal B 3, as discussed above.

The communication apparatus 1 and the terminal B 3 may e.g. be a mobile telephone, a mobile radio terminal, a pager, a communicator, an electronic organizer, a smartphone, a personal digital assistant, or a computer having communication capabilities. For illustrative purposes, reference will only be made to a mobile telephone 1 and a terminal B 3 in the following.

The mobile telephone 1 may comprise an antenna 10 for wirelessly communicating with the communication network 2, e.g. through a mobile communication network, such as a GSM (Global System for Mobile communications) or a UMTS (Universal Mobile Telecommunications System) network. Alternatively, the mobile telephone may be connected to the communication network 2 e.g. by means of a modem, through a wire connection, such as a public switched telephone network.

The mobile telephone 1, and the terminal B 3, may be an IMS (IP Multimedia Subsystem) terminal, which is adapted to run an application layer protocol, such as SIP (Session Initiation Protocol), together with a network protocol, such as IP (Internet Protocol), using e.g. UDP (User Datagram Protocol) or TCP (Transmission Control Protocol) as transport protocol.

In IMS, all SIP messages to and from IMS terminals will pass through a SIP proxy server, such as the network server 4. Thus, the network server 4 is adapted to store identification data for identifying IMS terminals registered as connected to the communication network 2, such as the mobile telephone 1 and the terminal B 3. Also, the network server 4 is adapted to store a port number associated with the identification data of each registered IMS terminal, to which a certain electronic message, e.g. a SIP message, should be directed. The identification data may comprise an electronic address, such as an SIP URI (Uniform Resource Identifier), and a network address, such as an IP address according to the following:

| SIP URI | IP Address | Port Number |
|---|---|---|
| sip:UserA@operator.com | 5555::aaa.bbb.ccc.ddd | xxxx |
| Sip:UserB@operator.com | 5555::eee.fff.ggg.hhh | yyyy |

The actual port number and network address is only known by the mobile telephone 1 and the network server 4. The port number identifies an accessible port at which a specific type of electronic message, such as an SIP message, will be received in the mobile telephone 1.

The network server 4 may be an S-CSCF (Serving Call Session Control Function) server or any server, which is adapted to relay electronic messages of a specific type to a specific port.

Terminal B 3 may send a message of the specific type to the mobile telephone 1 by addressing the message with the electronic address of the mobile telephone 1. The message is transmitted through the communication network 2 to the network server 4. The network server 4 is adapted to retrieve the network address and port number associated with the electronic address of the message, and forward the message to said port of the mobile telephone having the associated network address.

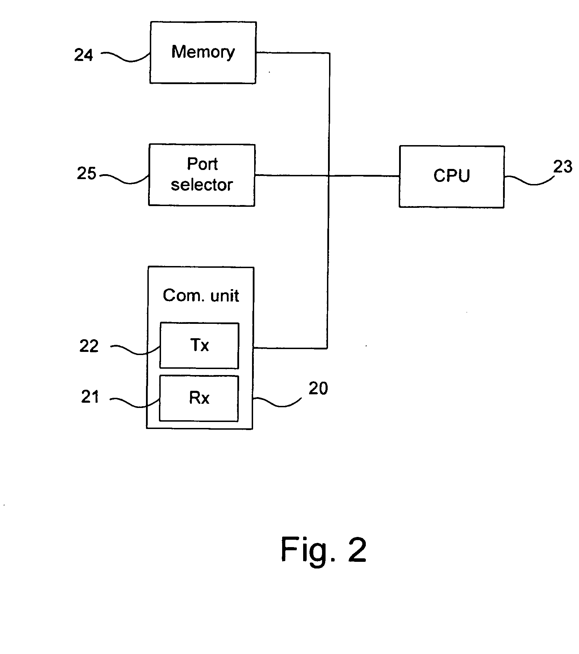

Fig. 2 illustrates certain components of the mobile telephone 1. A communication unit 20 comprises transmitting means 21, such as a transmitter, and receiving means 22, such as a receiver. The communication unit is connected to the antenna 10 and to a processing means or a controller 23, such a processor or central processing unit (CPU). The controller 23 is adapted to run different protocols, such as the application and transport protocols mentioned above. Also, the controller 23 is adapted to provide a certain port, which is the logical interface between the process or program for communicating electronic messages and the communication unit 20.

The mobile telephone 1 may comprise a variety of memories, such as a ROM (Read Only Memory), a RAM (Random Access Memory), and/or a SIM (Subscriber Identification Module), which are jointly illustrated by the memory 24. The memory 24 is connected to the controller 23.

A selecting means or port selector 25 is adapted to select, by means of a port selection function, one of a plurality of ports to make it accessible for receiving an electronic message of a specific type, such as an SIP message. Each port has its own port number. The port for a message of a specific type may be selected from a plurality of possible ports. Once the port is selected, the number of the selected port is forwarded to the controller 23, which may set the selected port to an open state. When the port is set to the open state, messages of the specific type may be received at said port. The port selector 25 may be software implemented, e.g. as a separate application run by the controller 23. However, the port selector 25 may also be provided as a separate hardware unit, such as a CPU, or an integrated circuit, such as an ASIC (Application Specific Integrated Circuit) or a FPGA (Field Programmable Gate Array).

The port selector 25 may be adapted to select the port, which is to be set to an open state, when the mobile telephone 1 is switched on. Alternatively, the port selector 25 is adapted to select said port when the mobile telephone 1 enters a specific mode, such as an IMS mode, wherein messages of the specific type may be received.

The controller 23 may be adapted to set the selected port to the open state for a predetermined time period or to a constantly open state for as long as the mobile telephone is switched on or maintained in the specific mode. The mobile terminal 1 may always have an active PDP (Packet Data Protocol) context and a valid IP address for as long as the mobile telephone is switched on or in the specific mode. Thus, when the selected port is open, the mobile telephone may always receive messages of the specific type such as an IMS message. Setting the port to a constantly open state has the advantage that the mobile telephone 1 may receive messages of the specific type for as long as it is switched on.

The selection function will ascertain that one of a plurality of ports is selected. The plurality of ports to choose from may be the 16384 possible ports outside the IANA (Internet Assigned Numbers Authority) well-known ports range and IANA registered ports range. None of said set of 16384 ports may be registered, and thus the port selector may choose unconditionally from this set of ports. If the port numbers are provided according to the IANA standard, they may any port number in the range of 49152-65535. However, if the invention is implemented together with another standard, the ports may have other port numbers provided in one or several ranges.

The selection function may be a function of one or several selection parameters. The selection function ascertains that a port is selected according to a scheme, which is not known by an external part. This is an advantage, as a potential attacker will not know to which port to send the message. One and the same port may be selected each time if said selected port is not known by any external part, such as the attacker 5, to be dedicated to receive messages of a specific type. Each mobile telephone 1 may select a different port, which e.g. is preset by the manufacturer. The selection function may also ascertain that a different port is chosen each time. This improves the security against potential attacks, since a different port will be set to an open state once the mobile telephone 1 has been switched off and on again. Furthermore, the selection function may ascertain that different mobile telephones 1 set different ports to the open state to receive messages of the specific type, e.g. by setting them to the open state according to a different scheme or randomly. This has the advantage that the security against attacks is further improved compared to selecting one and the same port. As mentioned above, the attacker does not know the network address of the mobile terminal 1. Thus, to be sure to attack one terminal, the attacker has to direct messages to all possible ports of all network addresses of the communication network 2, which is a huge amount compared to if the port is already known.

The selection function may be a random function, wherein the port selector 25 is adapted to choose a random number within the plurality of port numbers.

Alternatively, the selection function is a function of a unique identifier of the mobile telephone 1. For example, if the identifier is 123, the plurality of possible ports comprises 10 first subgroups, and each first subgroup comprises 10 second subgroups, the port can be selected according to the following selection function: the first digit (1) determines a first subgroup, the second digit (2) determines a second subgroup within the determined first subgroup, and the third digit (3) determines the port number within the determined second subgroup. Alternatively, the third digit (3) determines a third subgroup within the determined second subgroup, within which the port number is chosen randomly.

Alternatively the selection function is a function of a plurality of parameters, such as a combination of a unique identifier, the number of possible ports and the number of the first possible port to make accessible, i.e. the port having the lowest port number of the possible ports. This selection function may e.g. be implemented as: port number of port to make accessible=(UniqueIdentifier modulus NumberOfPossiblePorts)+FirstPossiblePortNumber.

The unique identifier may e.g. be the IMSI (International Mobile Subscriber Identifier) of the mobile telephone 1. IMSI is e.g. used in GSM and UMTS telecommunication systems. The IMSI may be retrieved from the memory 24, in which it is stored. Alternatively a separate unique identifier is assigned to each mobile telephone 1. However, it is an advantage to utilize the IMSI as no additional identifier has to be assigned. Also, any other identifier of the mobile telephone 1 may be utilized. It is an advantage if the selection function is based on the unique identifier, since then each mobile telephone 1 will select the port to be set to an opened state differently.

Still an alternative selection function is a function of a time parameter. The time parameter may be a certain point of time or a timer value. The point of time may e.g. be the point of time when the mobile telephone 1 is switched on, or when it enters a certain mode, such as the IMS mode. The timer value may be a time period e.g. calculated between the point of time when the mobile telephone 1 is switched on until it enters a certain mode, such as the IMS mode. The port selector 25 may be adapted to register the point of time when the mobile telephone 1 is switched on and/or enters the specific mode. Also, the port selector 25 may be adapted to start and stop the timer. If a time parameter is used, e.g. hh.mm.ss, and the possible plurality of ports are divided into 25 first subgroups, 61 second subgroups within each first subgroup, and 61 third subgroups within each second subgroup, the port can e.g. be selected according to the following selection function: select the first subgroup as the hour value (hh) of the time parameter; select the second subgroup within the selected first subgroup as the minute (mm) value of the time parameter; and select the port number within the selected second subgroup as the second value (ss) of the time parameter. Alternatively, in the selected second subgroup, the second value (ss) determines a third subgroup within the second subgroup, within which the port number is chosen randomly. In still an alternative selection function, the third subgroup is determined by means of the time parameter, and the unique identifier determines which port number to select therein. If the third subgroup comprises 100 port numbers (1...99) and the unique identifier comprises five digits, e.g. 12345, any combination of two digits, e.g. the value of the second and fifth digit (25 or 52), may determine the port number to be selected.

In an alternative embodiment of the selection function, it is a function of a time parameter, such as point of time, or a timer value, a date, the number of possible ports to make accessible, and the number of the first possible port to make accessible, i.e. the port having the lowest port number of the possible ports. This selection function may e.g. be implemented as: port number of port to make accessible=(TimeParameter modulus NumberOfPossiblePorts)+FirstPossiblePOrtNumber.

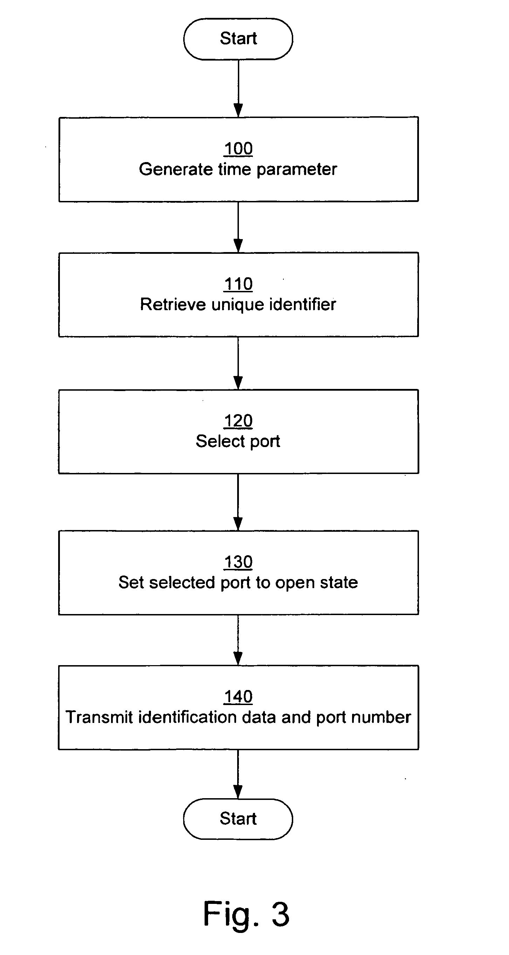

Fig. 3 illustrates an embodiment of the method according to the invention. In a first step 100 the time parameter is generated. The time parameter may be a point of time or a timer value as described above. In step 110, the unique identifier of the mobile telephone 1 is retrieved from the memory 24, such as from the SIM card. In step 120, the port to set to an open state to receive messages of a specific type is selected by means of the selection function. The selection function may be a function of one or several parameters, such as a time parameter, a unique identifier and/or a random number, as described above. If the selection function is only a function of a random number, step 100 and 110 need not be carried out. In step 130, the selected port is set to the open state. The port may be set in a constantly open state or in an open state for a predetermined time period, as described above. Once the port is set to the open state, it is ready to receive messages of the specific type. In step 140, the data for identifying the mobile terminal 1 and the port number of the selected port is transmitted to the network server 4.

The method according to the invention can be implemented by means of software. A computer program product comprising computer program code means to execute the method may be provided. Said code means may implement the method when run by an electronic device (1) having computer capabilities. The computer program code means may be embodied on a computer readable medium, such as the memory 24.

The present invention has been described above with reference to specific embodiments. However, other embodiments than the above described are possible within the scope of the invention. Different method steps than those described above, performing the method by hardware or software, may be provided within the scope of the invention. The different features and steps of the invention may be combined in other combinations than those described. The invention is only limited by the appended patent claims.

## Claims

1. A method for operating a communication apparatus (1), the method being carried out when an application layer protocol is run together with a transport protocol, the method comprising:
selecting (120) by means of a port selection function one of a plurality of ports to make it accessible for receiving electronic messages of a specific type; and
setting (130) said selected port to an open state,
**characterised in that**
said selection function is a function of a unique identifier of the communication apparatus (1), the method comprising retrieving (110) the unique identifier of the communication apparatus prior to selecting (120) said port.

2. The method according to claim 1, further comprising transmitting to a network server (4) data for identifying the communication apparatus (1), and a port number of said selected port, which is set to the open state.

3. The method according to claim 1 or 2, wherein the application layer protocol is SIP and the message is an SIP message, and wherein the transport protocol is UDP or TCP.

4. The method according to claim 2, wherein the data for identifying the communication apparatus (1) comprises an electronic address and a network address of the communication apparatus.

5. The method according to any of the previous claims, wherein said selection function additionally is a function of a time parameter, the method comprising generating said time parameter prior to selecting said port.

6. The method according to any of the previous claims, wherein said selection function additionally is a random function for randomly selecting one of a plurality of ports.

7. A communication apparatus (1) comprising means for receiving electronic messages (21) when an application layer protocol is run together with a transport protocol in said communication apparatus, the communication apparatus comprising:
a port selecting means (25) adapted to select by means of a port selection function one of a plurality of ports to make it accessible for receiving electronic messages of a specific type; and
a controller (23) adapted to set said selected port to an open state, **characterised in that**
said selection function is a function of a unique identifier of the communication apparatus (1), the port selecting means (25) being adapted to retrieve from a memory (24) the unique identifier of the communication apparatus prior to selecting said port.

8. The communication apparatus according to claim 7, further comprising a transmitter (22) adapted to transmit to a network server (4) data for identifying the communication apparatus (1), and a port number of said selected port, which is set to the open state.

9. The communication apparatus according to claim 7 or 8, wherein the application layer protocol is SIP and the message is an SIP message, and wherein the transport protocol is UDP or TCP.

10. The communication apparatus according to claim 8, wherein the data for identifying the communication apparatus (1) comprises an electronic address and a network address of the communication apparatus.

11. The communication apparatus according to any of the claims 7 to 10, wherein said selection function additionally is a function of time parameter, the port selecting means (25) being adapted to generate said time parameter prior to selecting said port.

12. The communication apparatus according to any of the claims 7 to 11, wherein said selection function additionally is a random function for randomly selecting one of a plurality of ports.

13. The communication apparatus according to any of the claims 7 to 12, wherein the communication apparatus is a mobile radio terminal, a pager, a communicator, an electronic organizer, a smartphone, a personal digital assistant, or a computer.

14. The communication apparatus according to any of the claims 7 to 12, wherein the communication apparatus is a mobile telephone (1).

15. A computer program product comprising computer program code means to execute the method according to claim 1 when said computer program code means is run by an electronic device (1) having computer capabilities.

16. The computer program product according to claim 15, wherein the computer program code means is embodied on a computer readable medium (24).

## Patentansprüche

1. Verfahren zum Betreiben eines Kommunikationsgerätes (1), wobei das Verfahren ausgeführt wird, wenn ein Anwendungsschichtprotokoll zusammen mit einem TransportProtokoll läuft, wobei das Verfahren umfasst:
Auswählen (120) mittels einer Port-Auswahlfunktion einen aus einer Vielzahl von Ports, um diesen zugänglich zum Empfangen von elektronischen Nachrichten eines spezifischen Typs zu machen; und
Setzen (130) des ausgewählten Ports auf einen offenen Zustand,
**dadurch gekennzeichnet, dass**
die Auswahlfunktion eine Funktion eines eindeutigen Identifikators des Kommunikationsgerätes (1) ist, wobei das Verfahren ein Abrufen (110) des eindeutigen Identifikators des Kommunikationsgerätes vor einem Auswählen (120) des Ports umfasst.

2. Verfahren nach Anspruch 1, weiter mit Übertragen von Daten an einen Netzwerkserver (4) zum Identifizieren des Kommunikationsgerätes (1) und eine Port-Nummer des ausgewählten Ports, der auf den offenen Zustand gesetzt ist.

3. Verfahren nach Anspruch 1 oder 2, wobei das Anwendungsschichtprotokoll SIP ist und die Nachricht eine SIP-Nachricht ist und wobei das Transportprotokoll UDP oder TCP ist.

4. Verfahren nach Anspruch 2, wobei die Daten zum Identifizieren das Kommunikationsgerätes (1) eine elektronische Adresse und eine Netzwerkadresse des Kommunikationsgerätes umfassen.

5. Verfahren nach einem der vorangehenden Ansprüche, wobei die Auswahlfunktion zusätzlich eine Funktion eines Zeitparameters ist, wobei das Verfahren ein Erzeugen des Zeitparameters vor einem Auswählen des Ports umfasst.

6. Verfahren nach einem der vorangehenden Ansprüche, wobei die Auswahlfunktion zusätzlich eine Zufallsfunktion zum zufälligen Auswählen von einem aus einer Vielzahl von Ports ist.

7. Kommunikationsgerät (1) mit einer Vorrichtung zum Empfangen elektronischer Nachrichten (21), wenn ein Anwendungsschichtprotokoll zusammen mit einem Transportprotokoll läuft, wobei das Kommunikationsgerät umfasst:
eine Port-auswählende Vorrichtung (25), die angepasst ist, mittels einer Port-Auswahlfunktion einen aus einer Vielzahl von Ports auszuwählen, um diesen zugänglich zum Empfangen von elektronischen Nachrichten eines spezifischen Typs zu machen; und
ein Steuergerät (23), das angepasst ist, den ausgewählten Port auf einen offenen Zustand zu setzen,
**dadurch gekennzeichnet, dass**
die Auswahlfunktion eine Funktion eines eindeutigen Identifikators des Kommunikationsgerätes (1) ist, wobei die Port-auswählende Vorrichtung (25) angepasst ist, aus einem Speicher (24) den eindeutigen Identifikator des Kommunikationsgerätes vor einem Auswählen (120) des Ports abzurufen.

8. Kommunikationsgerät nach Anspruch 7, weiter mit einem Sender (22), der angepasst ist, an einen Netzwerkserver (4) Daten zum Identifizieren des Kommunikationsgerätes (1) und eine Portnummer des ausgewählten Ports zu senden, der auf den offenen Zustand gesetzt ist.

9. Kommunikationsgerät nach Anspruch 7 oder 8, wobei das Anwendungsschichtprotokoll SIP ist und die Nachricht eine SIP-Nachricht ist und wobei das Transportprotokoll UDP oder TCP ist.

10. Kommunikationsgerät nach Anspruch 8, wobei die Daten zum Identifizieren des Kommunikationsgerätes (1) eine elektronische Adresse und eine Netzwerkadresse des Kommunikationsgerätes umfassen.

11. Kommunikationsgerät nach einem der vorangehenden Ansprüche 7 bis 10, wobei die Auswahlfunktion zusätzlich eine Funktion eines Zeitparameters ist, wobei die Port-auswählende Vorrichtung (25) angepasst ist, den Zeitparameter vor einem Auswählen des Ports zu erzeugen.

12. Kommunikationsgerät nach einem der vorangehenden Ansprüche 7 bis 11, wobei die Auswahlfunktion zusätzlich eine Zufallsfunktion zum zufälligen Auswählen von einem aus einer Vielzahl von Ports ist.

13. Kommunikationsgerät nach einem der Ansprüche 7 bis 12, wobei das Kommunikationsgerät ein mobiles Funkendgerät, ein Funkrufempfänger, ein Kommunikator, ein elektronischer Organisator, ein Smartphon, ein persönlicher digitaler Assistent oder ein Computer ist.

14. Kommunikationsgerät nach einem der Ansprüche 7 bis 12, wobei das Kommunikationsgerät ein Mobiltelefon ist.

15. Computerprogrammprodukt mit einer Computerprogrammcode-Vorrichtung, um das Verfahren nach Anspruch 1 auszuführen, wenn die Computerprogrammcode-Vorrichtung von einem elektronischen Gerät (1) mit Computer-Fähigkeiten laufen gelassen wird.

16. Computerprogrammprodukt nach Anspruch 15, wobei die Computerprogrammvorrichtung auf einem Computer-lesbaren Medium (24) verkörpert ist.

## Revendications

1. Procédé pour la mise en oeuvre d'un appareil de communication (1), le procédé étant exécuté lorsqu'un protocole de couche d'application est exécuté en même temps qu'un protocole de transport, le procédé comprenant :
la sélection (120) au moyen d'une fonction de sélection de port de l'un de multiples ports pour le rendre accessible pour la réception de messages électroniques d'un type spécifique ; et
l'établissement (130) dudit port sélectionné dans un état ouvert, **caractérisé en ce que**
ladite fonction de sélection est une fonction d'un identificateur unique de l'appareil de communication (1), le procédé comprenant la récupération (110) de l'identificateur unique de l'appareil de communication avant la sélection (120) dudit port.

2. Procédé selon la revendication 1, comprenant en outre la transmission à un serveur (4) de réseau de données pour identifier l'appareil de communication (1), et d'un numéro de port dudit port sélectionné, qui est établi à l'état ouvert.

3. Procédé selon la revendication 1 ou 2, dans lequel le protocole de couche d'application est un protocole SIP et le message est un message SIP, et dans lequel le protocole de transport est un protocole UDP ou TCP.

4. Procédé selon la revendication 2, dans lequel les données pour identifier l'appareil de communication (1) comprennent une adresse électronique et une adresse de réseau de l'appareil de communication.

5. Procédé selon l'une quelconque des revendications précédentes, dans lequel ladite fonction de sélection est en outre une fonction d'un paramètre de temps, le procédé comprenant la génération dudit paramètre de temps avant la sélection dudit port.

6. Procédé selon l'une quelconque des revendications précédentes, dans lequel ladite fonction de sélection est en outre une fonction aléatoire pour sélectionner de façon aléatoire l'un de plusieurs ports.

7. Appareil de communication (1) comportant un moyen destiné à recevoir des messages électroniques (21) lorsqu'un protocole de couche d'application est exécuté en même temps qu'un protocole de transport dans ledit appareil de communication, l'appareil de communication comportant :
un moyen (25) de sélection de port conçu pour sélectionner, au moyen d'une fonction de sélection de port, l'un de multiples ports afin de le rendre accessible pour la réception de messages électroniques d'un type spécifique ; et
un contrôleur (23) conçu pour établir ledit port sélectionné dans un état ouvert, **caractérisé en ce que**
ladite fonction de sélection est une fonction d'un identificateur unique de l'appareil de communication (1), le moyen (25) de sélection de port étant conçu pour récupérer à partir d'une mémoire (24) l'identificateur unique de l'appareil de communication avant la sélection dudit port.

8. Appareil de communication selon la revendication 7, comportant en outre un émetteur (22) conçu pour transmettre à un serveur (4) de réseau des données pour l'identification de l'appareil de communication (1), et un numéro de port dudit port sélectionné, qui est établi dans l'état ouvert.

9. Appareil de communication selon la revendication 7 ou 8, dans lequel le protocole de couche d'application est un protocole SIP et le message est un message SIP, et dans lequel le protocole de transport est un protocole UDP ou TCP.

10. Appareil de communication selon la revendication 8, dans lequel les données pour identifier l'appareil de communication (1) comprennent une adresse électronique et une adresse de réseau de l'appareil de communication.

11. Appareil de communication selon l'une quelconque des revendications 7 à 10, dans lequel ladite fonction de sélection est en outre une fonction d'un paramètre de temps, le moyen (25) de sélection de port étant conçu pour générer ledit paramètre de temps avant la sélection dudit port.

12. Appareil de communication selon l'une quelconque des revendications 7 à 11, dans lequel ladite fonction de sélection est en outre une fonction aléatoire pour sélectionner de façon aléatoire l'un de multiples ports.

13. Appareil de communication selon l'une quelconque des revendications 7 à 12, lequel appareil de communication est un terminal radio mobile, un dispositif de radiomessagerie, un dispositif de communication, un organiseur électronique, un téléphone à puce, un assistant numérique personnel ou un ordinateur.

14. Appareil de communication selon l'une quelconque des revendications 7 à 12, lequel appareil de communication est un téléphone mobile (1).

15. Produit à programme informatique comprenant un moyen à code de programme informatique pour l'exécution du procédé selon la revendication 1, lorsque ledit moyen à code de programme informatique est mis en oeuvre par un dispositif électronique (1) ayant des capacités informatiques.

16. Produit à programme informatique selon la revendication 15, dans lequel le moyen à code de programme informatique est matérialisé sur un support (24) lisible par ordinateur.
